(19) 

Europäisches
Patentamt

European
Patent Office

Office européen
des brevets

(11) **EP 4 133 833 B1**

(12) **EUROPEAN PATENT SPECIFICATION**

(45) Date of publication and mention
of the grant of the patent:
**06.05.2026 Bulletin 2026/19**

(21) Application number: **20930128.2**

(22) Date of filing: **08.04.2020**

(51) International Patent Classification (IPC):
*H04L 5/00* *(2006.01)*      *H04L 27/26* *(2006.01)*

(52) Cooperative Patent Classification (CPC):
**H04L 5/001; H04L 5/0085; H04L 5/0098;
H04L 27/26025;** H04L 5/0026; H04L 5/0048;
H04L 5/0064

(86) International application number:
**PCT/CN2020/083687**

(87) International publication number:
**WO 2021/203275 (14.10.2021 Gazette 2021/41)**

(54) **METHOD AND APPARATUS FOR PARAMETER SETTING**

VERFAHREN UND VORRICHTUNG ZUR PARAMETEREINSTELLUNG

PROCÉDÉ ET APPAREIL DE RÉGLAGE DE PARAMÈTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.02.2023 Bulletin 2023/07**

(73) Proprietor: **Telefonaktiebolaget LM ERICSSON
(PUBL)
16483 Stockholm (SE)**

(72) Inventors:
• **ZHOU, Wei
Beijing 100102 (CN)**
• **ZHANG, Qi
Beijing 100102 (CN)**

(74) Representative: **Ericsson
Patent Development
Torshamnsgatan 21-23
164 80 Stockholm (SE)**

(56) References cited:
WO-A1-2019/165224      CN-A- 109 474 375
CN-A- 110 958 179      US-A1- 2013 028 128
US-A1- 2019 104 543      US-A1- 2019 268 905
US-A1- 2019 312 635

• **INTERDIGITAL: "BWP switching during running
DRX timers", 3GPP DRAFT; R2-1812355 (R15
NRU SI AI 103110 DRX TIMERS BWP SWITCH),
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, vol. RAN WG2, no.
Gothenburg, Sweden; 20180820 - 20180824, 9
August 2018 (2018-08-09), Mobile Competence
Centre ; 650, route des Lucioles ; F-06921
Sophia-Antipolis Cedex ; France
, XP051521961**

**Description**

FIELD OF THE INVENTION

The present disclosure generally relates to communication networks, and more specifically, to method and apparatus for parameter setting.

BACKGROUND

This section introduces aspects that may facilitate a better understanding of the disclosure. Accordingly, the statements of this section are to be read in this light and are not to be understood as admissions about what is in the prior art or what is not in the prior art.

Communication service providers and network operators have been continually facing challenges to deliver value and convenience to consumers by, for example, providing compelling network services and performance. With the rapid development of networking and communication technologies, wireless communication networks such as long-term evolution (LTE) and new radio (NR) networks are expected to achieve high traffic capacity and end-user data rate with lower latency. In order to meet dramatically increasing network requirements, one interesting option for communication technique development is to support flexible network configuration with adaptive numerology. The term "numerology" may be used to refer to some parameters related to the radio resources for signal transmissions, such as subcarrier spacing (SCS), the length or duration of a cyclic prefix (CP), the length or duration of an orthogonal frequency division multiplexing (OFDM) symbol, the number of symbols contained in a time slot, the time slot duration, etc. Different numerologies and/or parameter settings may be deployed to achieve potentially network performance gain by flexible radio resource configuration. For example, US2019312635A1 discloses timing parameter management for bandwidth part switching. US2019104543A1 discloses method and apparatus for switching bandwidth part in new radio. WO2019165224A1 discloses system and method for bandwidth part operation. US2013028128A1 discloses system and method for dynamic band scheduling.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Comparing to LTE numerology (e.g., SCS, symbol length, etc.), the most outstanding difference in NR numerology is that a NR network may support multiple different types of SCS (e.g., 15kHz, 30kHz, 60kHz, 120kHz, etc.), while in an LTE network there is only one type of SCS (i.e. 15KHz). There may be many advantages of supporting multiple SCS options in the NR network. For example, the numerology with smaller SCS may enable a system to be more tolerable to the effect of multi-path delay spread, and the numerology with larger SCS may make it easier to compensate for the phase noise. However, there is no existing solution for adjusting SCS configuration adaptively according to different channel conditions and network environments. Therefore, it may be desirable to implement adaptive SCS setting in a more efficient way.

Various embodiments of the present disclosure propose a solution for adaptive parameter setting, which can enable SCS switching by triggering bandwidth part (BWP) configuration for a terminal device, e.g. user equipment (UE), according to measurement and/or traffic information of the terminal device, so as to increase flexibility of SCS configuration with enhanced resource utilization.

The invention is set out in the appended set of claims.

BRIEF DESCRIPTION OF THE DRAWINGS

The disclosure itself, the preferable mode of use and further objectives are best understood by reference to the following detailed description of the embodiments when read in conjunction with the accompanying drawings, in which:

Figs. 1A-1E are diagrams illustrating exemplary use cases of BWPs according to some embodiments of the present disclosure;

Figs.2A-2B are diagrams illustrating exemplary information elements according to some embodiments of the present disclosure;

Fig.3A is a diagram illustrating an exemplary adaptive parameter setting procedure according to an embodiment of the present disclosure;

Fig.3B is a diagram illustrating an exemplary BWP configuration according to an embodiment of the present disclosure;

Fig.4A is a diagram illustrating exemplary calculation of a main influence factor according to an embodiment of the present disclosure;

Fig.4B is a diagram illustrating exemplary frequency configuration according to an embodiment of the present disclosure;

Fig.5A is a flowchart illustrating a method according to some embodiments of the present disclosure;

Fig.5B is a flowchart illustrating another method according to some embodiments of the present disclosure;

Fig.6A is a block diagram illustrating an apparatus according to some embodiments of the present disclosure;

Fig.6B is a block diagram illustrating another apparatus according to some embodiments of the present disclosure;

Fig.6C is a block diagram illustrating a further apparatus according to some embodiments of the present disclosure;

Fig.7 is a block diagram illustrating a telecommunication network connected via an intermediate network to a host computer in accordance with some embodiments of the present disclosure;

Fig.8 is a block diagram illustrating a host computer communicating via a base station with a UE over a partially wireless connection in accordance with some embodiments of the present disclosure;

Fig.9 is a flowchart illustrating a method implemented in a communication system, in accordance with an embodiment of the present disclosure;

Fig.10 is a flowchart illustrating a method implemented in a communication system, in accordance with an embodiment of the present disclosure;

Fig.11 is a flowchart illustrating a method implemented in a communication system, in accordance with an embodiment of the present disclosure; and

Fig.12 is a flowchart illustrating a method implemented in a communication system, in accordance with an embodiment of the present disclosure.

DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. In other instances, additional features and advantages may be recognized in certain embodiments that may not be present in all embodiments of the disclosure.
As used herein, the term "communication network" refers to a network following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "network node" refers to a network device in a communication network via which a terminal device accesses to the network and receives services therefrom. The network node may refer to a base station (BS), an access point (AP), a multi-cell/multicast coordination entity (MCE), a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

Next-generation mobile communications are recently gathering increased momentum with all the world-wide technical activities on the various candidate technologies from industry and academia. A large variety of requirements for the next generation such as 5G network implies that frequency bands at many different carrier frequencies may be needed. Bandwidth part (BWP) is introduced to 5G systems for UE energy efficient in 3GPP Release 15.

3GPP NR can support very large operating bandwidths relative to the previous generations of 3GPP standards. Since UEs in a cell may have different bandwidth capabilities, the use of wide bandwidth may cause more power consumption and may increase radio frequency (RF) and baseband implementations complexity. Therefore, NR introduces the concept of BWP and allows the UEs with different bandwidth capabilities to operate in the cell with smaller instantaneous bandwidth relative to the configured cell bandwidth, making NR more energy efficient solution despite its support of wideband channels.

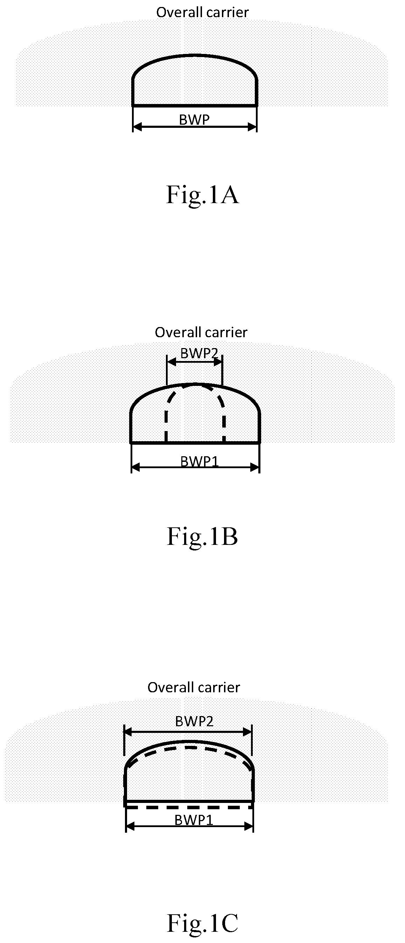

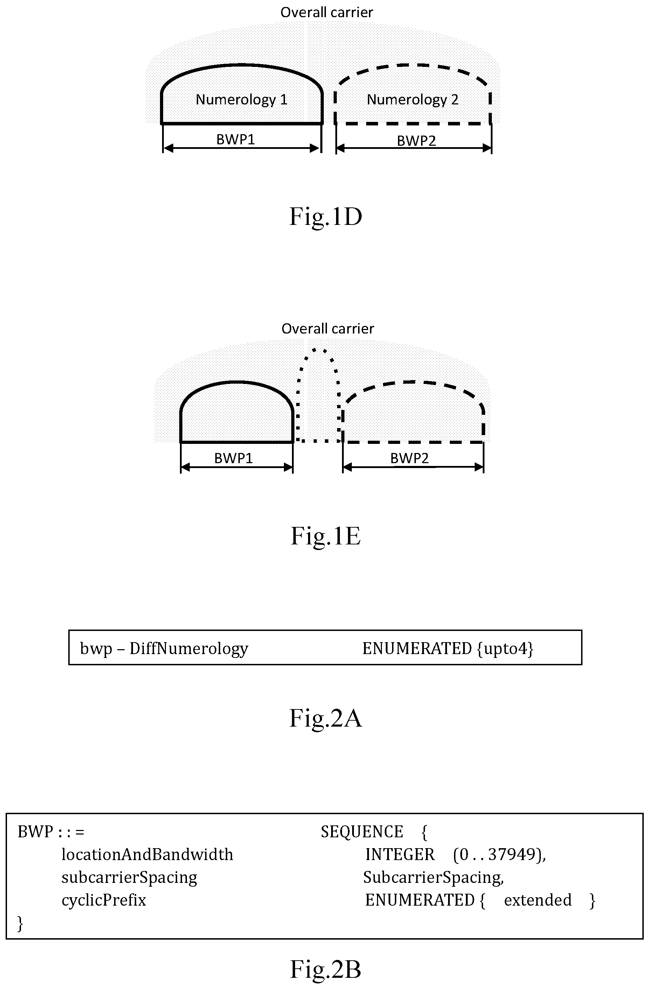

Figs. 1A-1E are diagrams illustrating exemplary use cases of BWPs according to some embodiments of the present disclosure. As illustrated in Figs.1A-1E, different BWPs may be configured for a certain carrier bandwidth. The configuration shown in Fig.1A may support reduced UE/network bandwidth. The configuration shown in Fig.1B may support bandwidth adaptation, e.g., for power consumption. The configuration shown in Fig.1C may support semidynamic configuration switch (e.g. between BWP1 and BWP2 in Fig.1C, where BWP1 and BWP2 may be configured with the same bandwidth but different numerologies). The configuration shown in Fig.1D may support mixed numerology (e.g. numerology1 for BWP1 and numerology2 for BWP2 in Fig.1D). The configuration shown in Fig.1E may support non-contiguous spectrum. It will be appreciated that the BWP configurations shown in Figs.1A-1E are just as examples, and alternative frequency allocation and BWP configuration (e.g., more or less BWPs and/or available frequency bands) may be applied according to some embodiments of the present disclosure.

In accordance with an exemplary embodiment, for each serving cell, up to four uplink/downlink (UL/DL) BWPs may be configured for a UE separately and independently for paired spectrum. Nevertheless, only one BWP may be active at the given time and the UE may not be expected to receive/transmit DL/UL physical signals/channels outside of the active BWP. For paired spectrum, a DL BWP and an UL BWP may be jointly configured as a pair and up to four pairs can be configured.

In accordance with an exemplary embodiment, a UE may be configured to switch between different BWPs. As described in 3GPP TS38.213 V15.6.0, TS38.214 V15.6.0 and TS38.331 V15.6.0, where the entire contents of these technical specifications are incorporated into the present disclosure by reference, 3GPP may support the following types of BWP switching:

- Random access (RA) based BWP switching;

- Downlink control information (DCI) based BWP switching;

- Timer based BWP switching; and

- Radio resource control (RRC) based BWP switching.

In accordance with an exemplary embodiment, some parameters or fields in UL/DL signaling or information elements may be used to indicate specific channel parameter setting and/or communication capability of a UE. Figs.2A-2B are diagrams illustrating exemplary information elements according to some embodiments of the present disclosure. As shown in Fig.2A, the parameter *bwp-DiffNumerology* in the UE capacity information element may be used to indicate whether the UE can support BWP adaptation up to four BWPs with different numerologies, e.g., via DCI and a timer. For the UE capable of this feature, the bandwidth of a UE-specific RRC configured DL BWP may include the bandwidth of the control resource set #0 (which is also known as CORESET#0 for short) (if CORESET#0 is present) and synchronization signal and physical broadcast channel block (which is also known as SS/PBCH block or SSB for short) for the primary cell (PCell) and the primary secondary cell (PSCell) (if configured). For secondary cell(s) (SCell(s)), the bandwidth of the UE-specific RRC configured DL BWP may include SSB, if there is SSB on SCell(s).

In accordance with an exemplary embodiment, the parameter *subcarrierSpacing* in the BWP configuration information element, as shown in Fig.2B, may be used to indicate SCS to be used in the corresponding BWP for all channels and reference signals unless explicitly configured elsewhere. As described in 3GPP TS 38.211 V16.0.0, where the entire content of this technical specification is incorporated into the present disclosure by reference, each BWP may be configured with specific SCS. As an example, multiple transmission numerologies may be supported as given by Table 1, where $\Delta f$ indicates SCS in kHz, the SCS index $\mu$ and the cyclic prefix for a BWP may be obtained from the higher-layer parameter *subcarrierSpacing* and *cyclicPrefix,* respectively.

Table 1

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

As listed in Table 1, the SCS value 15kHz corresponds to $\mu$=0, the SCS value 30kHz corresponds to $\mu$=1, and so on. According to an exemplary embodiment, only the SCS values 15kHz, 30kHz and 60kHz for frequency range 1 (FR1), and the SCS values 120kHz and 240kHz for frequency range 2 (FR2) may be applicable.

Many advantages may be achieved by supporting multiple SCS options in NR. In the case that the smaller SCS is used, the symbol length increase may be inversely proportional. With the longer symbol length, the CP of the OFDM symbol may be longer at the same ratio of the CP duration to the OFDM symbol duration, i.e., the CP overhead ratio. Thus, with the smaller SCS, a system can be made more tolerable to the effect of multi-path delay spread at the same CP overhead ratio.

On the other hand, the larger SCS can make the symbol duration shorter, which may be not only beneficial for fast transmission turnaround time but also advantageous in terms of lower sensitivity to phase noise. The phase noise may be a random process and directly impact up/down conversion between baseband and RF signals due to the temporal instability of the local oscillator(s). The phase noise in the frequency domain may give rise to signal jitter in the time domain. In general, the phase noise may increase with the carrier frequency and velocity of a UE. For example, Doppler frequency shift $f_d$ may be calculated as follow:

$$f_d = \frac{2*V}{C} * f_0 \qquad (1)$$

where $V$ is the velocity of the UE, $C$ is the speed of light, and $f_0$ is the carrier frequency of the UE.

In the case that the rate of phase variation is slow, with respect to the OFDM symbol duration, the phase noise may be modeled as a constant and can be compensated via estimation. The larger the SCS, the easier it is to compensate for the phase noise.

In order to improve the resource utilization and system performance of a communication network, various exemplary embodiments of the present disclosure propose a solution for adaptive parameter setting. The proposed solution may be applicable to a 5G/NR system or any other communication systems that may support BWP switching with different SCSs. In accordance with some exemplary embodiments, a network node (e.g., a gNB) may indicate a terminal device (e.g., a UE) to perform SCS switching according to one or more physical channel parameters and/or traffic requirements, which may be assisted by BWP configuration. In an embodiment with smaller SCS, the system may be more tolerable to the effect of multi-path delay spread. In another embodiment with larger SCS, the system may be more tolerable to the effect of phase noise and Doppler frequency offset.

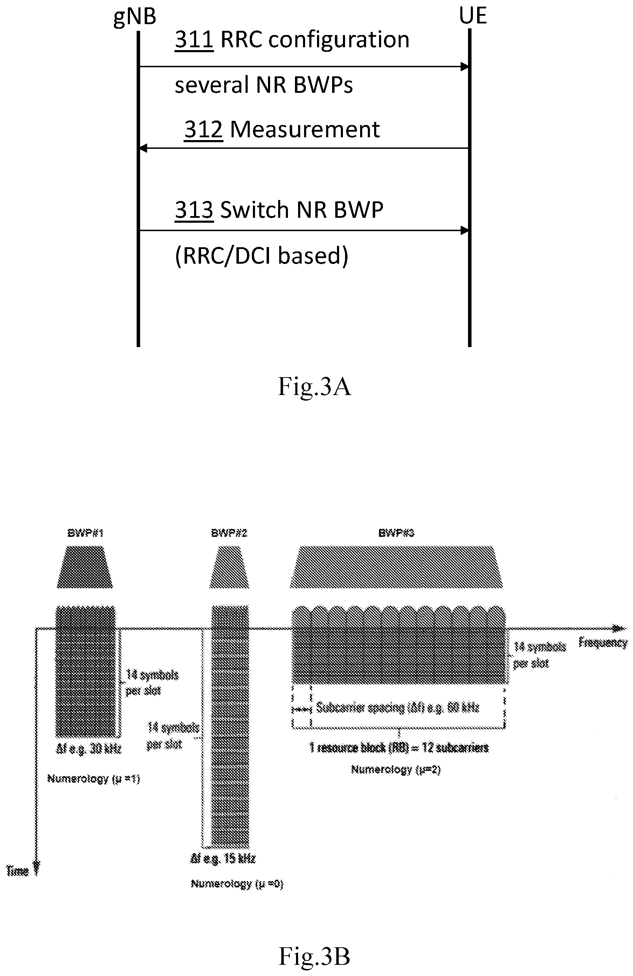

Fig.3A is a diagram illustrating an exemplary adaptive parameter setting procedure according to an embodiment of the present disclosure. The exemplary procedure as shown in Fig.3A may be performed to implement adaptive parameter setting (e.g., SCS switching, etc.) in UL and/or DL for a UE. For simplicity, Fig.3A only schematically depicts the adaptive parameter setting procedure performed by a gNB for a UE. It can be appreciated that procedure steps, signaling messages and transmission configurations illustrated in Fig.3A are just examples, and more or less alternative procedure steps, signaling messages and transmission configurations may be involved in the adaptive parameter setting procedure according to the embodiments of the present disclosure.

As shown in Fig.3A, the gNB may perform RRC configuration 311 for the UE, so as to configure several BWPs with different SCSs to the UE. In an exemplary embodiment, multi-subcarrier spacing for BWPs may only be configured to UEs which report capacity of *bwp-DiffNumerology* to the gNB. In another exemplary embodiment, in addition to UE capacity, BWP configuration may be triggered by various measurements, e.g., UL measurement and/or DL measurement. Various parameters may be configured to the UE by BWP configuration, for example, including but not limited to SCS, *locationAndBandwidth, cyclicPrefix* for a BWP and channel/signal (e.g., physical downlink control channel/ physical uplink control channel/channel state information-reference signal/sounding reference signal (PDCCH/PUCCH/CSI-RS/SRS), etc.) configured for the BWP. It can be appreciated that there may be many strategies to set these parameters.

Fig.3B is a diagram illustrating an exemplary BWP configuration according to an embodiment of the present disclosure. In an embodiment for FR1, SCS of 30kHz, 15kHz and 60KHz may be respectively configured to three BWPs (e.g. BWP#1, BWP#2 and BWP#3) with different numerologies, as shown in Fig.3B. Taking BWP#3 with numerology $\mu = 2$ as an example, a resource block (RB) may include 12 subcarriers, and there are 14 symbols per slot. In another embodiment for a system which may support to configure maximum four BWPs to one UE, in addition to BWP#1, BWP#2 and BWP#3 for FR1, a gNB may further configure BWP#4 with SCS of 60KHz and *cyclicPrefix* set as extended to the UE. In this case, the system may be more tolerable to the effect of multi-path delay spread.

It can be realized that parameters, variables and settings related to the BWP/SCS configuration described in connection with Fig.3B are just examples. Other suitable parameter settings, the associated configurations and the specific values thereof may also be applicable for implementing the proposed methods.

Referring back to Fig.3A, the gNB may calculate one or more physical channel parameters by DL measurement and/or UL measurement. According to an exemplary embodiment, the gNB may obtain 312 the DL measurement by a report from the UE, e.g. a CSI report to indicate rank index/precoding matrix indicator/channel quality indicator (RI/PMI/CQI), RI/CQI, CSI-RS resource indicator/reference signal received power (CRI/RSRP), etc. According to another exemplary embodiment, the gNB may perform some UL measurement, e.g. physical uplink shared channel (PUSCH) demodulation reference signal (DMRS), SRS measurement, etc. It can be appreciated that in addition to the DL/UL measurement of the UE, the gNB may also use measurement information about other UEs to estimate the one or more physical channel parameters for the UE. In accordance with some exemplary embodiments, the one or more physical channel parameters mentioned here may include various parameters related to the velocity and multi-path delay spread of the UE.

In accordance with an exemplary embodiment, the velocity of the UE may be indicated by the PMI variation/change of UE's reports. In the case that the UE keeps reporting the PMI to the gNB, the PMI change may be calculated by the PMI distance of two consecutive reports, and the velocity of the UE may be determined e.g. according to formula (2a) or (2b) as below:

$$\mathrm{PMID}(l_1, l_2) \geq Th_{\mathrm{h}} \qquad\qquad (2a)$$

$$\mathrm{PMID}(m_1, m_2) \geq Th_{\mathrm{v}} \qquad\qquad (2b)$$

where

- PMID is a support function to calculate the PMI change in a given dimension;
- $l_1$, $l_2$ are PMIs in horizontal direction of two consecutive reported PMIs;
- $m_1$, $m_2$ are PMIs in vertical direction of two consecutive reported PMIs;
- $Th_{\mathrm{h}}$ is a PMI change threshold in horizontal direction; and
- $Th_{\mathrm{v}}$ is a PMI change threshold in vertical direction.

In accordance with an exemplary embodiment, if the value of PMID is larger than the threshold either in horizontal direction or in vertical direction, then it is determined that the velocity of the UE is large. It can be appreciated that the PMI reported by the UE may be wideband or sub-band, and different thresholds may be set to distinguish channel vary in time into different levels.

In accordance with an exemplary embodiment, the RI may be used to indicate the multi-path delay spread of the UE. For example, if the RI of the UE is larger than a specific value, it means that several layers with orthogonal paths that have good channel quality may be transmitted to the UE. In this case, the UE may be more likely to have the multi-path delay spread.

In accordance with an exemplary embodiment, the velocity of the UE may be indicated by the CRI variation of consecutive reports (where the CSI-RS is configured for beam management). As described with respect to the embodiment of the PMI variation, if the consecutive reported CRIs change rapidly, it means that the UE may have high speed.

In accordance with an exemplary embodiment, various signals (e.g., PUSCH DMRS, SRS, etc.) may be used to estimate Doppler frequency shift and/or the multi-path delay spread of the UE. Alternatively or additionally, the multi-path delay spread of the UE also may be calculated according to the channel estimation by DMRS.

In accordance with an exemplary embodiment, for burst transmission communication systems, a receiver may need to estimate and compensate for Doppler frequency shift quickly and correctly in order to receive data accurately. According to an embodiment, the receiver (e.g., at the gNB) may estimate Doppler frequency shift by using pilot symbols/signals (e.g., DRMS, SRS, etc.). Then the velocity of the UE may be calculated according to the estimated Doppler frequency shift.

In accordance with some exemplary embodiments, the gNB may determine whether to trigger 313 BWP/SCS switching (e.g., RRC/DCI based, etc.), according to one or more physical channel parameters of the UE, as shown in Fig.3A. In an embodiment, the gNB may follow the criterions as shown in Table 2 to decide BWP/SCS switching.

Table 2

| Velocity | Multi-path | Suitable SCS |
|----------|-----------|--------------|
| Low | Little | Legacy, not trigger BWP configuration |
| High | Little | Trigger BWP configuration & switch to larger SCS |
| Low | Many | Trigger BWP configuration & switch to smaller SCS |
| High | Many | Trigger BWP configuration & switch to larger SCS with extended CPs |

According to the criterions in Table 2, if the UE has low speed and little multi-path, then the gNB may decide to use the legacy parameter setting without triggering BWP configuration. If the UE has high speed without so many multi-paths, then the gNB may decide to trigger BWP configuration to switch to a BWP with larger SCS. If the UE has low speed with so many multi-paths, then the gNB may decide to trigger BWP configuration to switch to a BWP with smaller SCS. If the UE has high speed with many multi-paths, then the gNB may decide to trigger BWP configuration, so as to switch to a BWP with larger SCS with extended CPs.

In another embodiment, the gNB may calculate a velocity factor and a multi-path factor with corresponding weights for the UE. Various weighting schemes or functions may be used to represent the weighted velocity factor and the weighted multi-path factor of the UE. For example, if the UE's channel is identified as a channel with high velocity, then the weighted velocity factor for the UE may be represented by W_v=6; if the UE's channel is identified as a channel with middle velocity, then the weighted velocity factor for the UE may be represented by W_v=5; and if the UE's channel is identified as a channel with low velocity, then the weighted velocity factor for the UE may be represented by W_v=4. Similarly, if the UE's channel is identified as a channel with many paths, then the weighted multi-path factor for the UE may be represented by $W\_p=3$; if the UE's channel is identified as a channel with a medium amount of paths (also called "middle paths"), then the weighted multi-path factor for the UE may be represented by $W\_p=2$; and if the UE's channel is identified as a channel with little paths, then the weighted multi-path factor for the UE may be represented by $W\_p=1$. It can be appreciated that the values of the weighted velocity factor such as 4, 5 and 6 and the weighted multi-path factor such as 1, 2 and 3 are just examples. It is possible that the weighted velocity factor and the weighted multi-path factor may be represented by other values.

According to an exemplary embodiment, the gNB may compare the weighted velocity factor and the weighted multi-path factor of the UE, so as to determine a main influence factor W of triggering BWP/SCS switching for the UE.

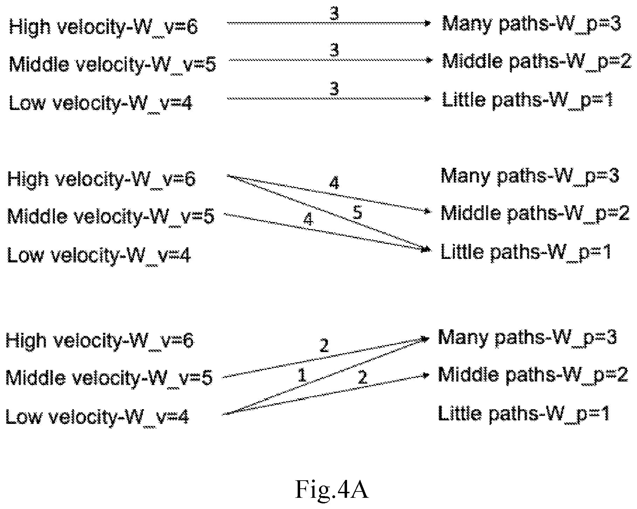

Fig.4A is a diagram illustrating exemplary calculation of a main influence factor according to an embodiment of the present disclosure. In the embodiment as shown in Fig.4A, the main influence factor W of the UE may be calculated as below according to a difference between the two weighted factors.

$$W = W\_v - W\_p \qquad\qquad (3)$$

- If $W=Th_{trigger}$ (e.g., 3 or other proper values), meaning that the velocity factor and the multi-path factor have the similar weight of impact on the UE, then the gNB may decide to keep legacy parameter setting without triggering BWP configuration. In an embodiment, if $W=Th_{trigger}$, the gNB may decide to trigger BWP configuration to switch to larger SCS with extended CPs, e.g., for the case that both the velocity factor and the multi-path factor of the UE have larger values, as described with respect to Table 2.

- If $W>Th_{trigger}$, meaning that the velocity factor has a bigger impact on the UE, then the gNB may decide to trigger BWP configuration, so as to switch to larger SCS.

- If $W<Th_{trigger}$, meaning that the multi-path factor has a bigger impact on the UE, then the gNB may decide to trigger BWP configuration, so as switch to smaller SCS.

Please note that the parameter names (e.g., W, W_v and W_p) and the threshold (e.g., $Th_{trigger}$) or a value range (e.g., $> Th_{trigger}$ or $< Th_{trigger}$) used herein are exemplary, and other names, thresholds and ranges may also be used to indicate the same or similar information. In addition, it can be appreciated that functions, variables and weights related to the determination of BWP/SCS switching described in connection with Fig.4A are just examples, and other suitable function settings, the associated variables, weights and values thereof may also be applicable for implementing the proposed methods.

In accordance with some exemplary embodiments, the gNB may determine whether to trigger BWP/SCS switching according to the traffic type of the UE. Different traffic types may be associated with different SCSs. For example, the larger SCS with a short duration of slot may benefit for a traffic such as ultra-reliable low latency communication (URLLC) which may be based on mini-slot for low latency as described in 3GPP Release 15/16. In an embodiment, the gNB may check the traffic type of the UE, e.g., URLLC, enhance mobile broadband (eMBB), etc. If the traffic of the UE requires low latency, then the larger SCS may be configured to the UE, e.g., by triggering BWP configuration for the UE. Otherwise, for example, for eMBB, the smaller SCS may be preferred for the UE. In this way, the UE can switch between different SCSs by BWP configuration according to the traffic type demand. It can be appreciated that BWP/SCS switching for the UE may be based on any combination of the traffic type, the velocity factor and the multi-path factor of the UE, according to different application scenarios and/or service requirements. For example, in a single traffic scenario, the BWP/SCS switching may be triggered based on the velocity factor and/or the multi-path factor of the UE, without considering the traffic type of the UE. In multi-traffic scenarios, the BWP/SCS switching may be triggered based on the traffic type of the UE, with less consideration or without consideration of the velocity factor and/or the multi-path factor of the UE, so as to reduce system overhead.

In accordance with some exemplary embodiments, the gNB may consider various BWP/SCS configurations and divided UEs served by the gNB into several groups. According to an embodiment, UE group0 may include a first group of UEs configured with SCS of 15KHz, UE group 1 may include a second group of UEs configured with SCS of 30KHz, UE group2 may include a third group of UEs configured with SCS of 60KHz, and so on. Normally, UEs configured with different SCSs may cause interference for each other if they are scheduled as neighbors. A guard band may be set between two frequency bands with different SCSs to avoid mutual interference. In an exemplary embodiment, the gNB may schedule UEs in the same group within the same frequency band so as to save guard bands. In this case, it may not be necessary to set a guard band within the same frequency band.

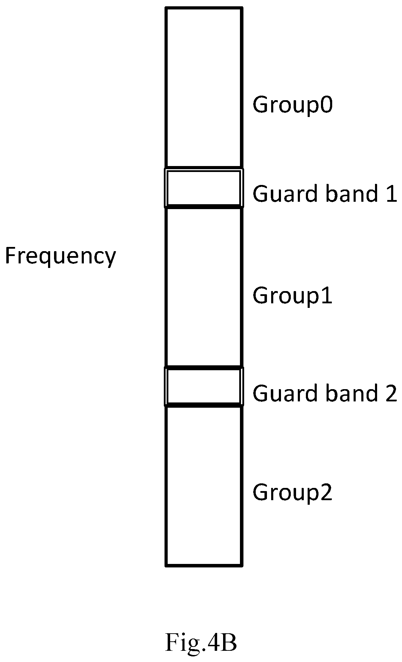

Fig.4B is a diagram illustrating exemplary frequency configuration according to an embodiment of the present disclosure. As shown in Fig.4B, guard band 1 may be used to separate two frequency bands respectively associated with UE group0 and UE group 1, and guard band 2 may be used to separate two frequency bands respectively associated with UE group1 and UE group2. As an example, in the case that UEs in group1 are configured with the same SCS, there may be no interference between the UEs when they are scheduled by a gNB within the frequency band associated with group 1, even if there is no guard band set within this frequency band. Similarly, there may be no need to configure a guard band within the frequency band associated with group0 and the frequency band associated with group2. It can be appreciated that the frequency configuration and the association between frequency bands and UE groups are just examples, and other proper frequency configuration, association between frequency bands and UE groups, and grouping schemes also may be applicable in various embodiments of the present disclosure.

In accordance with some exemplary embodiments, the gNB may trigger BWP configuration to activate/switch BWP/SCS for DL and/or UL transmissions according to different schemes, for example, using DCI/RRC based BWP/SCS switching, etc. In an embodiment for DCI-based BWP/SCS switching, the gNB may activate/switch a BWP by setting a BWP indicator in DCI for the UE. For example, the BWP indicator with one or more bits may be determined by the number of UL BWPs $n_{BWPRRC}$ configured by higher layers, excluding the initial UL BWP. The bitwidth for the parameter or field "BWP indicator" may be determined as $\lceil \log_2(n_{BWP}) \rceil$ bits, where

- $n_{BWP} = n_{BWPRRC} + 1$ if $n_{BWPRRC} \leq 3$, in which case the BWP indicator is equivalent to the ascending order of the higher layer parameter BWP-ID;
- otherwise $n_{BWP} = n_{BWPRRC}$, in which case the BWP indicator is defined in Table 3.

Table 3

| Value of the BWP indicator field | BWP |
|---|---|
| 2 bits | |
| 00 | Configured BWP with BWP-ID = 1 |
| 01 | Configured BWP with BWP-ID = 2 |
| 10 | Configured BWP with BWP-ID = 3 |
| 11 | Configured BWP with BWP-ID = 4 |

As shown in Table 3, the gNB may set the 2-bit BWP indicator to different values (e.g., 00, 01, 10 and 11), so as to indicate BWPs with different BWP-IDs. In an embodiment, the BWP-IDs with values "1", "2", "3" and "4" may be used to indicate BWP#1, BWP#2, BWP#3 and BWP#4 as described with respect to Fig.3B or other possible BWPs configured with the corresponding SCS.

It is noted that some embodiments of the present disclosure are mainly described in relation to 5G or NR specifications being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration or radio technologies may equally be utilized as long as exemplary embodiments described herein are applicable.

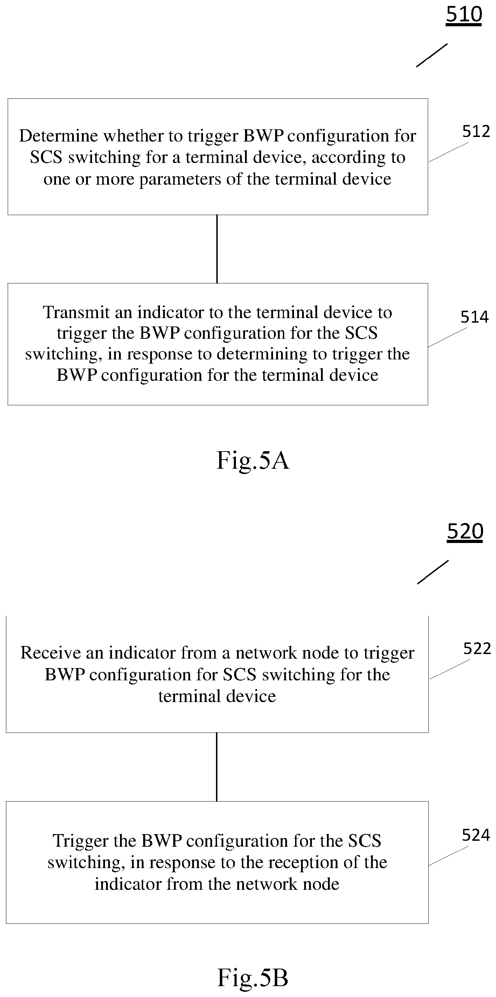

Fig.5A is a flowchart illustrating a method 510 according to some embodiments of the present disclosure. The method 510 illustrated in Fig.5A may be performed by a network node or an apparatus communicatively coupled to the network node. In accordance with an exemplary embodiment, the network node may comprise a base station, an AP, a transmission point or any other suitable entity that may be capable of serving one or more terminal devices such as UEs according to specific communication protocols.

According to the exemplary method 510 illustrated in Fig.5A, the network node can determine whether to trigger BWP configuration for SCS switching for a terminal device, according to one or more parameters of the terminal device, as shown in block 512. In accordance with some exemplary embodiments, the BWP configuration may indicate the terminal device to switch from a first BWP to a second BWP, and the first BWP and the second BWP may be configured with different SCSs.

It can be appreciated that multiple BWP options (e.g., BWP#1, BWP#2, BWP#3 and BWP#4 as described with respect to Fig.3B) may be preconfigured to the terminal device by the network node, e.g., by RRC signaling. Alternatively or additionally, the network node may dynamically adjust the BWP options available for the terminal device as required. According to an exemplary embodiment, the network node may transmit to the terminal device information about multiple BWPs with different SCSs available for the terminal device. In an embodiment, the BWP configuration may be used to activate one of the multiple BWPs for the terminal device.

In accordance with some exemplary embodiments, the one or more parameters of the terminal device may comprise a velocity factor, a multi-path factor, a traffic type, or any combination thereof. For example, the velocity factor may be used to indicate the speed of the terminal device, the multi-path factor may be used to indicate the multi-path delay spread of the terminal device, and the traffic type may be used to indicate one or more traffic requirements of the terminal device.

In accordance with some exemplary embodiments, the one or more parameters of the terminal device may be related to UL measurement information of the terminal device, DL measurement information of the terminal device, a traffic type demand of the terminal device, and/or any other possible information which may reflect channel conditions and/or service quality.

In accordance with some exemplary embodiments, the determination of whether to trigger the BWP configuration for the SCS switching for the terminal device according to the one or more parameters of the terminal device may comprise: determining to trigger the BWP configuration for switching from first SCS to second SCS for the terminal device, in response to that the one or more parameters meet a first criterion. In an embodiment, the second SCS may be larger than the first SCS.

According to an embodiment, the first criterion indicates that a velocity factor of the terminal device is larger than a first threshold and a multi-path factor of the terminal device is less than a second threshold (e.g., meaning high speed and little multi-path as shown in the third line of Table 2). According to another example not covered by the claims, the first criterion may indicate that a difference between weights of a velocity factor and a multi-path factor of the terminal device is within a first range (e.g., being larger than $Th_{trigger}$ as described with respect to Fig.4A). According to another example not covered by the claims, the first criterion may indicate that a traffic type of the terminal device is associated with a first delay requirement (e.g., a delay sensitive traffic such as URLLC which may require low latency).

In accordance with some exemplary embodiments, the determination of whether to trigger the BWP configuration for the SCS switching for the terminal device according to the one or more parameters of the terminal device may comprise: determining to trigger the BWP configuration for switching from third SCS to fourth SCS for the terminal device, in response to that the one or more parameters meet a second criterion. In an embodiment, the fourth SCS may be smaller than the third SCS. The embodiments related to the second criterion is not part of the present invention.

According to an exemplary embodiment, the second criterion may indicate that a velocity factor of the terminal device is less than a third threshold and a multi-path factor of the terminal device is larger than a fourth threshold (e.g., meaning low speed and many multi-paths as shown in the fourth line of Table 2). According to another exemplary embodiment, the second criterion may indicate that a difference between weights of a velocity factor and a multi-path factor of the terminal device is within a second range (e.g., being smaller than $Th_{trigger}$ as described with respect to Fig.4A). According to another exemplary embodiment, the second criterion may indicate that a traffic type of the terminal device is associated with a second delay requirement (e.g., a non-delay sensitive traffic, etc.).

In accordance with some exemplary embodiments, the determination of whether to trigger the BWP configuration for the SCS switching for the terminal device according to the one or more parameters of the terminal device may comprise: determining to trigger the BWP configuration for switching from fifth SCS to sixth SCS for the terminal device, in response to that the one or more parameters meet a third criterion. In an embodiment, the sixth SCS may be associated with an extended CP and larger than the fifth SCS. The embodiments related to the third criterion is not part of the present invention.

According to an exemplary embodiment, the third criterion may indicate that a velocity factor of the terminal device is larger than a fifth threshold and a multi-path factor of the terminal device is larger than a sixth threshold (e.g., meaning high speed and many multi-paths as shown in the fifth line of Table 2).

In accordance with some exemplary embodiments, the determination of whether to trigger the BWP configuration for the SCS switching for the terminal device according to the one or more parameters of the terminal device may comprise: determining not to trigger the BWP configuration for the SCS switching for the terminal device, in response to that the one or more parameters meet a fourth criterion. The embodiments related to the fourth criterion is not part of the present invention.

According to an exemplary embodiment, the fourth criterion may indicate that a velocity factor of the terminal device is less than a seventh threshold and a multi-path factor of the terminal device is less than an eighth threshold (e.g., meaning low speed and little multi-path as shown in the second line of Table 2). According to another exemplary embodiment, the fourth criterion may indicate that a difference between weights of a velocity factor and a multi-path factor of the terminal device is within a third range or equals to a specific value (e.g., $Th_{trigger}$ as described with respect to Fig.4A).

According to the exemplary method 510 illustrated in Fig.5A, the network node may transmit an indicator to the terminal device to trigger the BWP configuration for the SCS switching, in response to determining to trigger the BWP configuration for the terminal device, as shown in block 514. In accordance with some exemplary embodiments, the network node may transmit the indicator to the terminal device in one or more of: RRC signaling, DCI and a MAC CE. According to an exemplary embodiment, the indicator transmitted to the terminal device may indicate a BWP configured with specific SCS to which the terminal device is to switch. In this way, the network node can dynamically activate/switch the SCS adaptive to various communication environments of the terminal device.

In accordance with some exemplary embodiments, the network node may determine a device group to which the terminal device belongs, according to the BWP configuration for the terminal device. In an embodiment, each member of the device group (e.g., gourp0, group1 and group2 as described with respect to Fig.4B) may be configured with the same SCS and may be able to be scheduled in a frequency band without a guard band.

Fig.5B is a flowchart illustrating a method 520 according to some embodiments of the present disclosure. The method 520 illustrated in Fig.5B may be performed by a terminal device or an apparatus communicatively coupled to the terminal device. In accordance with an exemplary embodiment, the terminal device such as a UE may be capable of communicating with a network node (e.g., a base station, an AP, a transmission point, etc.) according to specific communication protocols.

According to the exemplary method 520 illustrated in Fig.5B, the terminal device may receive an indicator from a network node (e.g., the network node as described with respect to Fig.5A) to trigger BWP configuration for SCS switching for the terminal device, as shown in block 522. In an embodiment, the BWP configuration may be based at least in part on one or more parameters (e.g., a velocity factor, a multi-path factor, and/or a traffic type, etc.) of the terminal device. In response to the reception of the indicator from the network node, the terminal device may trigger the BWP configuration for the SCS switching, as shown in block 524.

It can be appreciated that the steps, operations and related configurations of the method 520 illustrated in Fig.5B may be correspond to the steps, operations and related configurations of the method 510 illustrated in Fig.5A. It also can be appreciated that the BWP configuration for SCS switching as described with respect to Fig.5B may correspond to the BWP configuration for SCS switching as described with respect to Fig.5A. Thus, the BWP configuration for SCS switching as described with respect to the method 510 and method 520 may have the same or similar contents and feature elements. Similarly, the one or more parameters of the terminal device as described with respect to Fig.5B may correspond to the one or more parameters of the terminal device as described with respect to Fig.5A.

In accordance with some exemplary embodiments, the terminal device may receive from the network node information about multiple BWPs with different SCSs available for the terminal device. As described with Fig.5A, the BWP configuration triggered for the terminal device may be used to activate one of the multiple BWPs for the terminal device.

In accordance with some exemplary embodiments, the terminal device may receive the indicator for triggering the BWP configuration from the network node in RRC signaling, DCI, and/or MAC CE, etc. According to the indicator received from the network node, the terminal device may determine a BWP configured with specific SCS to which the terminal device is to switch.

In accordance with some exemplary embodiments, triggering the BWP configuration for the SCS switching may comprise: performing BWP switching to switch from first SCS to second SCS which is larger than the first SCS. In this case, the one or more parameters may meet a first criterion (e.g., the first criterion as described with respect to Fig.5A).

In accordance with some exemplary embodiments, triggering the BWP configuration for the SCS switching may comprise: performing BWP switching to switch from third SCS to fourth SCS which is smaller than the third SCS. In this case, the one or more parameters may meet a second criterion (e.g., the second criterion as described with respect to Fig.5A).

In accordance with some exemplary embodiments, triggering the BWP configuration for the SCS switching may comprise: performing BWP switching to switch from fifth SCS to sixth SCS which is associated with an extended CP and larger than the fifth SCS. In this case, the one or more parameters may meet a third criterion (e.g., the third criterion as described with respect to Fig.5A).

In accordance with some exemplary embodiments, the terminal device may belong to a device group, e.g., group0, group1 and group2 as shown in Fig.4B. In addition to the terminal device, the device group may also include one or more other terminal devices served by the network node. In an embodiment, each member of the device group may be configured with the same SCS and may be able to be scheduled by the network node in a frequency band without a guard band.

Various exemplary embodiments according to the present disclosure may enable SCS switching for a terminal device according to different communication environments and requirements. In accordance with some exemplary embodiments, a gNB may configure multiple BWPs with different SCSs to a UE in a cell served by the gNB, and calculate one or more physical channel parameters (e.g., a velocity factor, a multi-path factor, etc.) for the terminal device by measurement. Based at least in part on the one or more physical channel parameters and/or a traffic type of the terminal device, the gNB may trigger BWP/SCS switching for the UE, so as to benefit the UE with high speed and/or multi-path by configuring better SCS. According to an embodiment, a UE may be configured with multiple BWPs supporting different SCSs. In a line of sight (LOS) scenario, BWP/SCS switching may be performed for the UE according to the speed level of the UE, e.g., larger SCS for higher speed and smaller SCS for lower speed. In an environment full of multi-path, a UE with higher speed may switch to a BWP configured with larger SCS and the extended CP, while a UE with lower speed may switch a BWP configured with smaller SCS. Alternatively or additionally, BWP/SCS switching also may be performed according to the traffic type demand of the UE. In an embodiment, UEs configured with the same SCS may be divided into a device group and scheduled in a specific frequency band, e.g. without a guard band. Application of various exemplary embodiments can advantageously improve network performance and resource efficiency, and enhance flexibility of system configuration and implementation.

The various blocks shown in Figs.5A-5B may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

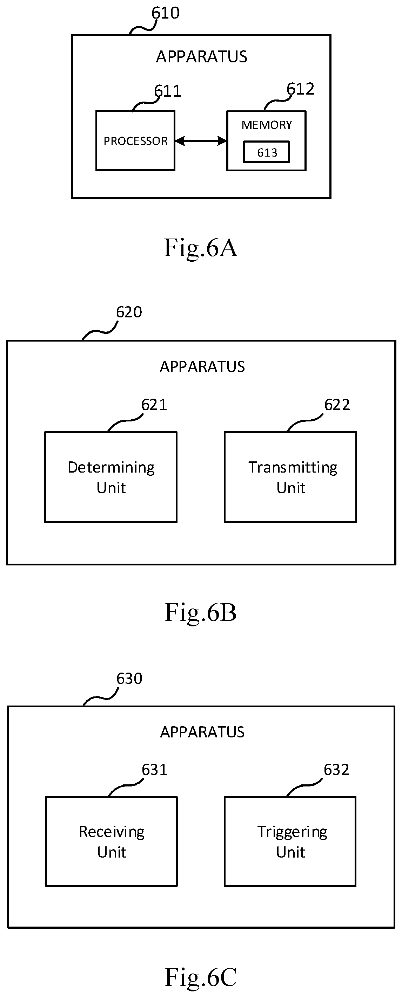

Fig.6A is a block diagram illustrating an apparatus 610 according to various embodiments of the present disclosure. As shown in Fig.6A, the apparatus 610 may comprise one or more processors such as processor 611 and one or more memories such as memory 612 storing computer program codes 613. The memory 612 may be non-transitory machine/processor/computer readable storage medium. In accordance with some exemplary embodiments, the apparatus 610 may be implemented as an integrated circuit chip or module that can be plugged or installed into a network node as described with respect to Fig.5A, or a terminal device as described with respect to Fig.5B. In such case, the apparatus 610 may be implemented as a network node as described with respect to Fig.5A, or a terminal device as described with respect to Fig.5B.

In some implementations, the one or more memories 612 and the computer program codes 613 may be configured to, with the one or more processors 611, cause the apparatus 610 at least to perform any operation of the method as described in connection with Fig.5A. In other implementations, the one or more memories 612 and the computer program codes 613 may be configured to, with the one or more processors 611, cause the apparatus 610 at least to perform any operation of the method as described in connection with Fig.5B. Alternatively or additionally, the one or more memories 612 and the computer program codes 613 may be configured to, with the one or more processors 611, cause the apparatus 610 at least to perform more or less operations to implement the proposed methods according to the exemplary embodiments of the present disclosure.

Fig.6B is a block diagram illustrating an apparatus 620 according to some embodiments of the present disclosure. As shown in Fig.6B, the apparatus 620 may comprise a determining unit 621 and a transmitting unit 622. In an exemplary embodiment, the apparatus 620 may be implemented in a network node such as a base station. The determining unit 621 may be operable to carry out the operation in block 512, and the transmitting unit 622 may be operable to carry out the operation in block 514. Optionally, the determining unit 621 and/or the transmitting unit 622 may be operable to carry out more or less operations to implement the proposed methods according to the exemplary embodiments of the present disclosure.

Fig.6C is a block diagram illustrating an apparatus 630 according to some embodiments of the present disclosure. As shown in Fig.6C, the apparatus 630 may comprise a receiving unit 631 and a triggering unit 632. In an exemplary embodiment, the apparatus 630 may be implemented in a terminal device such as a UE. The receiving unit 631 may be operable to carry out the operation in block 522, and the triggering unit 632 may be operable to carry out the operation in block 524. Optionally, the receiving unit 631 and/or the triggering unit 632 may be operable to carry out more or less operations to implement the proposed methods according to the exemplary embodiments of the present disclosure.

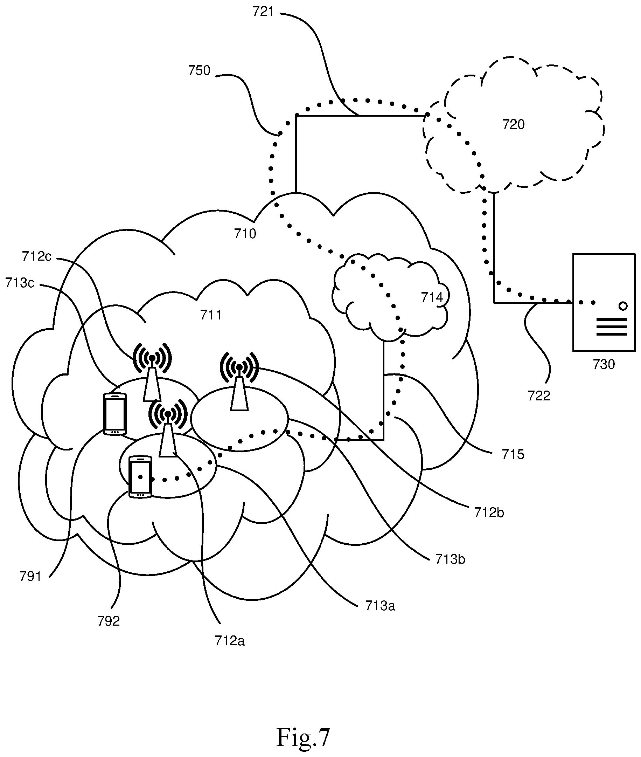

Fig.7 is a block diagram illustrating a telecommunication network connected via an intermediate network to a host computer in accordance with some embodiments of the present disclosure.

With reference to Fig.7, in accordance with an embodiment, a communication system includes a telecommunication network 710, such as a 3GPP-type cellular network, which comprises an access network 711, such as a radio access network, and a core network 714. The access network 711 comprises a plurality of base stations 712a, 712b, 712c, such as NBs, eNBs, gNBs or other types of wireless access points, each defining a corresponding coverage area 713a, 713b, 713c. Each base station 712a, 712b, 712c is connectable to the core network 714 over a wired or wireless connection 715. A first UE 791 located in a coverage area 713c is configured to wirelessly connect to, or be paged by, the corresponding base station 712c. A second UE 792 in a coverage area 713a is wirelessly connectable to the corresponding base station 712a. While a plurality of UEs 791, 792 are illustrated in this example, the disclosed embodiments are equally applicable to a situation where a sole UE is in the coverage area or where a sole UE is connecting to the corresponding base station 712.

The telecommunication network 710 is itself connected to a host computer 730, which may be embodied in the hardware and/or software of a standalone server, a cloud-implemented server, a distributed server or as processing resources in a server farm. The host computer 730 may be under the ownership or control of a service provider, or may be operated by the service provider or on behalf of the service provider. Connections 721 and 722 between the telecommunication network 710 and the host computer 730 may extend directly from the core network 714 to the host computer 730 or may go via an optional intermediate network 720. An intermediate network 720 may be one of, or a combination of more than one of, a public, private or hosted network; the intermediate network 720, if any, may be a backbone network or the Internet; in particular, the intermediate network 720 may comprise two or more sub-networks (not shown).

The communication system of Fig.7 as a whole enables connectivity between the connected UEs 791, 792 and the host computer 730. The connectivity may be described as an over-the-top (OTT) connection 750. The host computer 730 and the connected UEs 791, 792 are configured to communicate data and/or signaling via the OTT connection 750, using the access network 711, the core network 714, any intermediate network 720 and possible further infrastructure (not shown) as intermediaries. The OTT connection 750 may be transparent in the sense that the participating communication devices through which the OTT connection 750 passes are unaware of routing of uplink and downlink communications. For example, the base station 712 may not or need not be informed about the past routing of an incoming downlink communication with data originating from the host computer 730 to be forwarded (e.g., handed over) to a connected UE 791. Similarly, the base station 712 need not be aware of the future routing of an outgoing uplink communication originating from the UE 791 towards the host computer 730.

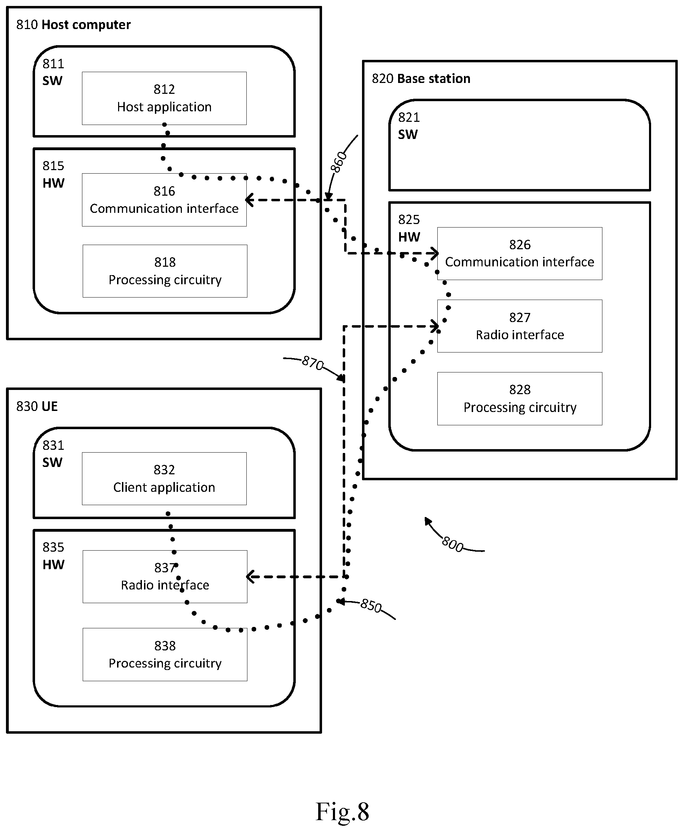

Fig.8 is a block diagram illustrating a host computer communicating via a base station with a UE over a partially wireless connection in accordance with some embodiments of the present disclosure.

Example implementations, in accordance with an embodiment, of the UE, base station and host computer discussed in the preceding paragraphs will now be described with reference to Fig.8. In a communication system 800, a host computer 810 comprises hardware 815 including a communication interface 816 configured to set up and maintain a wired or wireless connection with an interface of a different communication device of the communication system 800. The host computer 810 further comprises a processing circuitry 818, which may have storage and/or processing capabilities. In particular, the processing circuitry 818 may comprise one or more programmable processors, application-specific integrated circuits, field programmable gate arrays or combinations of these (not shown) adapted to execute instructions. The host computer 810 further comprises software 811, which is stored in or accessible by the host computer 810 and executable by the processing circuitry 818. The software 811 includes a host application 812. The host application 812 may be operable to provide a service to a remote user, such as UE 830 connecting via an OTT connection 850 terminating at the UE 830 and the host computer 810. In providing the service to the remote user, the host application 812 may provide user data which is transmitted using the OTT connection 850.

The communication system 800 further includes a base station 820 provided in a telecommunication system and comprising hardware 825 enabling it to communicate with the host computer 810 and with the UE 830. The hardware 825 may include a communication interface 826 for setting up and maintaining a wired or wireless connection with an interface of a different communication device of the communication system 800, as well as a radio interface 827 for setting up and maintaining at least a wireless connection 870 with the UE 830 located in a coverage area (not shown in Fig.8) served by the base station 820. The communication interface 826 may be configured to facilitate a connection 860 to the host computer 810. The connection 860 may be direct or it may pass through a core network (not shown in Fig.8) of the telecommunication system and/or through one or more intermediate networks outside the telecommunication system. In the embodiment shown, the hardware 825 of the base station 820 further includes a processing circuitry 828, which may comprise one or more programmable processors, application-specific integrated circuits, field programmable gate arrays or combinations of these (not shown) adapted to execute instructions. The base station 820 further has software 821 stored internally or accessible via an external connection.

The communication system 800 further includes the UE 830 already referred to. Its hardware 835 may include a radio interface 837 configured to set up and maintain a wireless connection 870 with a base station serving a coverage area in which the UE 830 is currently located. The hardware 835 of the UE 830 further includes a processing circuitry 838, which may comprise one or more programmable processors, application-specific integrated circuits, field programmable gate arrays or combinations of these (not shown) adapted to execute instructions. The UE 830 further comprises software 831, which is stored in or accessible by the UE 830 and executable by the processing circuitry 838. The software 831 includes a client application 832. The client application 832 may be operable to provide a service to a human or non-human user via the UE 830, with the support of the host computer 810. In the host computer 810, an executing host application 812 may communicate with the executing client application 832 via the OTT connection 850 terminating at the UE 830 and the host computer 810. In providing the service to the user, the client application 832 may receive request data from the host application 812 and provide user data in response to the request data. The OTT connection 850 may transfer both the request data and the user data. The client application 832 may interact with the user to generate the user data that it provides.

It is noted that the host computer 810, the base station 820 and the UE 830 illustrated in Fig.8 may be similar or identical to the host computer 730, one of base stations 712a, 712b, 712c and one of UEs 791, 792 of Fig.7, respectively. This is to say, the inner workings of these entities may be as shown in Fig.8 and independently, the surrounding network topology may be that of Fig.7.

In Fig.8, the OTT connection 850 has been drawn abstractly to illustrate the communication between the host computer 810 and the UE 830 via the base station 820, without explicit reference to any intermediary devices and the precise routing of messages via these devices. Network infrastructure may determine the routing, which it may be configured to hide from the UE 830 or from the service provider operating the host computer 810, or both. While the OTT connection 850 is active, the network infrastructure may further take decisions by which it dynamically changes the routing (e.g., on the basis of load balancing consideration or reconfiguration of the network).

Wireless connection 870 between the UE 830 and the base station 820 is in accordance with the teachings of the embodiments described throughout this disclosure. One or more of the various embodiments improve the performance of OTT services provided to the UE 830 using the OTT connection 850, in which the wireless connection 870 forms the last segment. More precisely, the teachings of these embodiments may improve the latency and the power consumption, and thereby provide benefits such as lower complexity, reduced time required to access a cell, better responsiveness, extended battery lifetime, etc.

A measurement procedure may be provided for the purpose of monitoring data rate, latency and other factors on which the one or more embodiments improve. There may further be an optional network functionality for reconfiguring the OTT connection 850 between the host computer 810 and the UE 830, in response to variations in the measurement results. The measurement procedure and/or the network functionality for reconfiguring the OTT connection 850 may be implemented in software 811 and hardware 815 of the host computer 810 or in software 831 and hardware 835 of the UE 830, or both. In embodiments, sensors (not shown) may be deployed in or in association with communication devices through which the OTT connection 850 passes; the sensors may participate in the measurement procedure by supplying values of the monitored quantities exemplified above, or supplying values of other physical quantities from which the software 811, 831 may compute or estimate the monitored quantities. The reconfiguring of the OTT connection 850 may include message format, retransmission settings, preferred routing etc.; the reconfiguring need not affect the base station 820, and it may be unknown or imperceptible to the base station 820. Such procedures and functionalities may be known and practiced in the art. In certain embodiments, measurements may involve proprietary UE signaling facilitating the host computer 810's measurements of throughput, propagation times, latency and the like. The measurements may be implemented in that the software 811 and 831 causes messages to be transmitted, in particular empty or 'dummy' messages, using the OTT connection 850 while it monitors propagation times, errors etc.

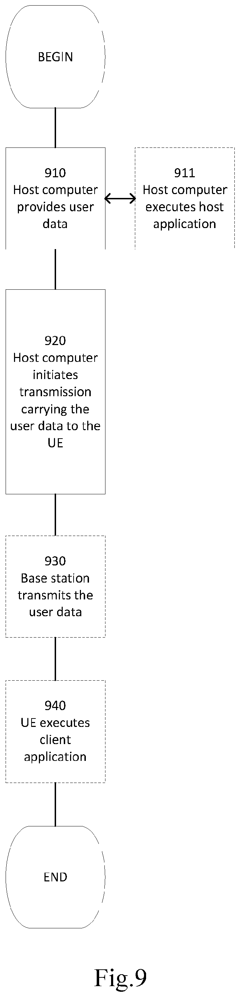

Fig.9 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.9 will be included in this section. In step 910, the host computer provides user data. In substep 911 (which may be optional) of step 910, the host computer provides the user data by executing a host application. In step 920, the host computer initiates a transmission carrying the user data to the UE. In step 930 (which may be optional), the base station transmits to the UE the user data which was carried in the transmission that the host computer initiated, in accordance with the teachings of the embodiments described throughout this disclosure. In step 940 (which may also be optional), the UE executes a client application associated with the host application executed by the host computer.

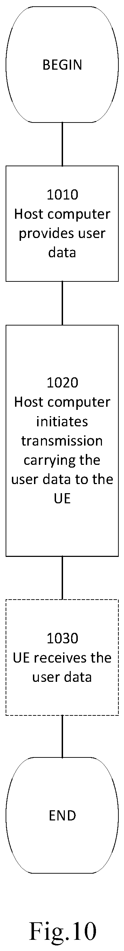

Fig.10 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.10 will be included in this section. In step 1010 of the method, the host computer provides user data. In an optional substep (not shown) the host computer provides the user data by executing a host application. In step 1020, the host computer initiates a transmission carrying the user data to the UE. The transmission may pass via the base station, in accordance with the teachings of the embodiments described throughout this disclosure. In step 1030 (which may be optional), the UE receives the user data carried in the transmission.

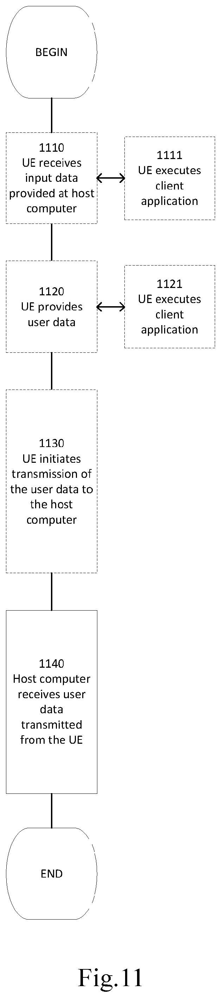

Fig.11 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.11 will be included in this section. In step 1110 (which may be optional), the UE receives input data provided by the host computer. Additionally or alternatively, in step 1120, the UE provides user data. In substep 1121 (which may be optional) of step 1120, the UE provides the user data by executing a client application. In substep 1111 (which may be optional) of step 1110, the UE executes a client application which provides the user data in reaction to the received input data provided by the host computer. In providing the user data, the executed client application may further consider user input received from the user. Regardless of the specific manner in which the user data was provided, the UE initiates, in substep 1130 (which may be optional), transmission of the user data to the host computer. In step 1140 of the method, the host computer receives the user data transmitted from the UE, in accordance with the teachings of the embodiments described throughout this disclosure.

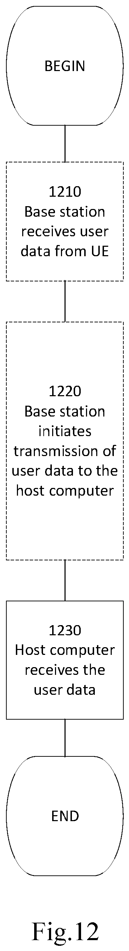

Fig.12 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.12 will be included in this section. In step 1210 (which may be optional), in accordance with the teachings of the embodiments described throughout this disclosure, the base station receives user data from the UE. In step 1220 (which may be optional), the base station initiates transmission of the received user data to the host computer. In step 1230 (which may be optional), the host computer receives the user data carried in the transmission initiated by the base station.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station which may perform any step of the exemplary method 510 as describe with respect to Fig.5A.

According to some exemplary embodiments, there is provided a communication system including a host computer. The host computer may comprise processing circuitry configured to provide user data, and a communication interface configured to forward the user data to a cellular network for transmission to a UE. The cellular network may comprise a base station having a radio interface and processing circuitry. The base station's processing circuitry may be configured to perform any step of the exemplary method 510 as describe with respect to Fig.5A.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station. The UE may perform any step of the exemplary method 520 as describe with respect to Fig.5B.

According to some exemplary embodiments, there is provided a communication system including a host computer. The host computer may comprise processing circuitry configured to provide user data, and a communication interface configured to forward user data to a cellular network for transmission to a UE. The UE may comprise a radio interface and processing circuitry. The UE's processing circuitry may be configured to perform any step of the exemplary method 520 as describe with respect to Fig.5B.

According to some exemplary embodiments, there is provided a method implemented in a communication system which may include a host computer, a base station and a UE. The method may comprise, at the host computer, receiving user data transmitted to the base station from the UE which may perform any step of the exemplary method 520 as describe with respect to Fig.5B.

According to some exemplary embodiments, there is provided a communication system including a host computer. The host computer may comprise a communication interface configured to receive user data originating from a transmission from a UE to a base station. The UE may comprise a radio interface and processing circuitry. The UE's processing circuitry may be configured to perform any step of the exemplary method 520 as describe with respect to Fig.5B.

According to some exemplary embodiments, there is provided a method implemented in a communication system which may include a host computer, a base station and a UE. The method may comprise, at the host computer, receiving, from the base station, user data originating from a transmission which the base station has received from the UE. The base station may perform any step of the exemplary method 510 as describe with respect to Fig.5A.

According to some exemplary embodiments, there is provided a communication system which may include a host computer. The host computer may comprise a communication interface configured to receive user data originating from a transmission from a UE to a base station. The base station may comprise a radio interface and processing circuitry. The base station's processing circuitry may be configured to perform any step of the exemplary method 510 as describe with respect to Fig.5A.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure.

**Claims**

1.  A method (510) performed by a network node, comprising:

    determining (512) whether to trigger bandwidth part configuration for subcarrier spacing switching for a terminal device, according to one or more parameters of the terminal device; and
    transmitting (514) an indicator to the terminal device to trigger the bandwidth part configuration for the subcarrier spacing switching, in response to determining to trigger the bandwidth part configuration for the terminal device, wherein the determination of whether to trigger the bandwidth part configuration for the subcarrier spacing switching for the terminal device according to the one or more parameters of the terminal device comprises:
    determining to trigger the bandwidth part configuration for switching from first subcarrier spacing to second subcarrier spacing for the terminal device, in response to that the one or more parameters meet a first criterion, **characterized in that** the second subcarrier spacing is larger than the first subcarrier spacing, the first criterion indicating that a velocity factor of the terminal device is larger than a first threshold and a multi-path factor of the terminal device is less than a second threshold.

2.  The method according to claim 1, wherein the bandwidth part configuration indicates the terminal device to switch from a first bandwidth part to a second bandwidth part, and wherein the first bandwidth part and the second bandwidth part are configured with different subcarrier spacing.

3.  The method according to claim 1, wherein the first criterion indicates that a difference between weights of a velocity factor and a multi-path factor of the terminal device is within a first range.

4.  The method according to claim 1, wherein the first criterion indicates that a traffic type of the terminal device is associated with a first delay requirement.

5.  A network node (610), comprising:

    one or more processors (611); and
    one or more memories (612) storing computer program codes (613),
    the one or more memories (612) and the computer program codes (613) configured to, with the one or more processors (611), cause the network node (610) at least to:

    determine whether to trigger bandwidth part configuration for subcarrier spacing switching for a terminal device, according to one or more parameters of the terminal device; and
    transmit an indicator to the terminal device to trigger the bandwidth part configuration for the subcarrier spacing switching, in response to determining to trigger the bandwidth part configuration for the terminal device, wherein the determination of whether to trigger the bandwidth part configuration for the subcarrier spacing switching for the terminal device according to the one or more parameters of the terminal device comprises:
    determining to trigger the bandwidth part configuration for switching from first subcarrier spacing to second subcarrier spacing for the terminal device, in response to that the one or more parameters meet a first criterion, **characterized in that** the second subcarrier spacing is larger than the first subcarrier spacing, the first criterion indicating that a velocity factor of the terminal device is larger than a first threshold and a multi-path factor of the terminal device is less than a second threshold.

6.  A method (520) performed by a terminal device, comprising:

    receiving (522) an indicator from a network node to trigger bandwidth part configuration for subcarrier spacing switching for the terminal device, wherein the bandwidth part configuration is based at least in part on one or more parameters of the terminal device; and
triggering (524) the bandwidth part configuration for the subcarrier spacing switching, in response to the reception of the indicator from the network node,
wherein triggering the bandwidth part configuration for the subcarrier spacing switching comprises:

performing bandwidth part switching to switch from first subcarrier spacing to second subcarrier spacing, wherein the second subcarrier spacing is larger than the first subcarrier spacing, and the one or more parameters meet a first criterion,
**characterized in that** the first criterion indicates that a velocity factor of the terminal device is larger than a first threshold and a multi-path factor of the terminal device is less than a second threshold.

7. A terminal device (610), comprising:

one or more processors (611); and
one or more memories (612) storing computer program codes (613),
the one or more memories (612) and the computer program codes (613) configured to, with the one or more processors (611), cause the terminal device (610) at least to:

receive an indicator from a network node to trigger bandwidth part configuration for subcarrier spacing switching for the terminal device, wherein the bandwidth part configuration is based at least in part on one or more parameters of the terminal device; and
trigger the bandwidth part configuration for the subcarrier spacing switching, in response to the reception of the indicator from the network node, wherein triggering the bandwidth part configuration for the subcarrier spacing switching comprises:
performing bandwidth part switching to switch from first subcarrier spacing to second subcarrier spacing, **characterized in that** the second subcarrier spacing is larger than the first subcarrier spacing, and the one or more parameters meet a first criterion, wherein the first criterion indicates that a velocity factor of the terminal device is larger than a first threshold and a multi-path factor of the terminal device is less than a second threshold.

**Patentansprüche**

1. Verfahren (510), das von einem Netzwerkknoten durchgeführt wird und Folgendes umfasst:

Bestimmen (512), ob Konfiguration eines Bandbreitenteils für Unterträgerabstandsumschaltung für eine Endgerätevorrichtung gemäß einem oder mehreren Parametern der Endgerätevorrichtung ausgelöst werden soll,
Senden (514) eines Indikators zum Auslösen der Konfiguration des Bandbreitenteils für die Unterträgerabstandsumschaltung an die Endgerätevorrichtung in Reaktion auf das Bestimmen, dass die Konfiguration des Bandbreitenteils für die Endgerätevorrichtung ausgelöst werden soll, wobei
die Bestimmung dessen, ob die Konfiguration des Bandbreitenteils für die Unterträgerabstandsumschaltung für die Endgerätevorrichtung gemäß dem einen oder den mehreren Parametern der Endgerätevorrichtung ausgelöst werden soll, Folgendes umfasst:

Bestimmen, die Konfiguration des Bandbreitenteils zum Umschalten eines ersten Unterträgerabstands auf einen zweiten Unterträgerabstand für die Endgerätevorrichtung auszulösen, in Reaktion darauf, dass der eine oder die mehreren Parameter ein erstes Kriterium erfüllen; **dadurch gekennzeichnet, dass** der zweite Unterträgerabstand größer als der erste Unterträgerabstand ist, wobei das erste Kriterium anzeigt, dass ein Geschwindigkeitsfaktor der Endgerätevorrichtung größer als ein erster Schwellenwert ist und ein Mehrwegefaktor der Endgerätevorrichtung kleiner als ein zweiter Schwellenwert ist.

2. Verfahren nach Anspruch 1, wobei die Konfiguration des Bandbreitenteils der Endgerätevorrichtung anzeigt, dass sie von einem ersten Bandbreitenteil auf einen zweiten Bandbreitenteil umschalten soll, und wobei der erste Bandbreitenteil und der zweite Bandbreitenteil mit unterschiedlichem Unterträgerabstand konfiguriert sind.

3. Verfahren nach Anspruch 1, wobei das erste Kriterium anzeigt, dass eine Differenz zwischen Gewichten eines Geschwindigkeitsfaktors und eines Mehrwegefaktors der Endgerätevorrichtung innerhalb eines ersten Bereichs liegt.

4. Verfahren nach Anspruch 1, wobei das erste Kriterium anzeigt, dass ein Verkehrstyp der Endgerätevorrichtung mit einer ersten Verzögerungsanforderung assoziiert ist.

5. Netzwerkknoten (610), umfassend:

   einen oder mehrere Prozessoren (611) und
   einen oder mehrere Speicher (612), die Computerprogrammcodes (613) speichern,
   wobei der eine oder die mehreren Speicher (612) und die Computerprogrammcodes (613) so konfiguriert sind, dass sie mit dem einen oder den mehreren Prozessoren (611) den Netzwerkknoten (610) zumindest zu Folgendem veranlassen:

      Bestimmen, ob Konfiguration eines Bandbreitenteils für Unterträgerabstandsumschaltung für eine Endgerätevorrichtung gemäß einem oder mehreren Parametern der Endgerätevorrichtung ausgelöst werden soll,
      Senden eines Indikators zum Auslösen der Konfiguration des Bandbreitenteils für die Unterträgerabstandsumschaltung an die Endgerätevorrichtung in Reaktion auf das Bestimmen, dass die Konfiguration des Bandbreitenteils für die Endgerätevorrichtung ausgelöst werden soll, wobei
      die Bestimmung dessen, ob die Konfiguration des Bandbreitenteils für die Unterträgerabstandsumschaltung für die Endgerätevorrichtung gemäß dem einen oder den mehreren Parametern der Endgerätevorrichtung ausgelöst werden soll, Folgendes umfasst:

         Bestimmen, die Konfiguration des Bandbreitenteils zum Umschalten von einem ersten Unterträgerabstand auf einen zweiten Unterträgerabstand für die Endgerätevorrichtung auszulösen, in Reaktion darauf, dass der eine oder die mehreren Parameter ein erstes Kriterium erfüllen; **dadurch gekennzeichnet, dass**
         der zweite Unterträgerabstand größer als der erste Unterträgerabstand ist, wobei das erste Kriterium angibt, dass ein Geschwindigkeitsfaktor der Endgerätevorrichtung größer als ein erster Schwellenwert ist und ein Mehrwegefaktor der Endgerätevorrichtung kleiner als ein zweiter Schwellenwert ist.

6. Verfahren (520), das von einer Endgerätevorrichtung durchgeführt wird und Folgendes umfasst:

   Empfangen (522) eines Indikators von einem Netzwerkknoten zum Auslösen von Konfiguration eines Bandbreitenteils für Unterträgerabstandsumschaltung für die Endgerätevorrichtung, wobei die Konfiguration des Bandbreitenteils zumindest teilweise auf einem oder mehreren Parametern der Endgerätevorrichtung basiert; und
   Auslösen (524) der Konfiguration des Bandbreitenteils für die Unterträgerabstandsumschaltung in Reaktion auf den Empfang des Indikators von dem Netzwerkknoten,
   wobei das Auslösen der Konfiguration des Bandbreitenteils für die Unterträgerabstandsumschaltung Folgendes umfasst:

      Durchführen von Umschaltung des Bandbreitenteils, um von einem ersten Unterträgerabstand auf einen zweiten Unterträgerabstand umzuschalten, wobei der zweite Unterträgerabstand größer als der ersten Unterträgerabstand ist und der eine oder die mehreren Parameter ein erstes Kriterium erfüllen; **dadurch gekennzeichnet, dass**
      das erste Kriterium anzeigt, dass ein Geschwindigkeitsfaktor der Endgerätevorrichtung größer als ein erster Schwellenwert ist und ein Mehrwegefaktor der Endgerätevorrichtung kleiner als ein zweiter Schwellenwert ist.

7. Endgerätevorrichtung (610), umfassend:

   einen oder mehrere Prozessoren (611) und
   einen oder mehrere Speicher (612), die Computerprogrammcodes (613) speichern,
   wobei der eine oder die mehreren Speicher (612) und die Computerprogrammcodes (613) so konfiguriert sind, dass sie mit dem einen oder den mehreren Prozessoren (611) die Endgerätevorrichtung (610) zumindest zu Folgendem veranlassen:

Empfangen eines Indikators von einem Netzwerkknoten zum Auslösen einer Konfiguration eines Bandbreitenteil für Unterträgerabstandsumschaltung für die Endgerätevorrichtung, wobei die Konfiguration des Bandbreitenteils zumindest teilweise auf einem oder mehreren Parametern der Endgerätevorrichtung basiert; und

Auslösen der Konfiguration des Bandbreitenteils für die Unterträgerabstandsumschaltung in Reaktion auf den Empfang des Indikators von dem Netzwerkknoten, wobei

wobei das Auslösen der Konfiguration des Bandbreitenteils für die Unterträgerabstandsumschaltung Folgendes umfasst:

Durchführen von Umschaltung des Bandbreitenteils, um von einem ersten Unterträgerabstand auf einen zweiten Unterträgerabstand umzuschalten, **dadurch gekennzeichnet, dass**

der zweite Unterträgerabstand größer als der erste Unterträgerabstand ist und der eine oder die mehreren Parameter ein erstes Kriterium erfüllen, wobei das erste Kriterium anzeigt, dass ein Geschwindigkeitsfaktor der Endgerätevorrichtung größer als ein erster Schwellenwert ist und ein Mehrwegefaktor der Endgerätevorrichtung kleiner als ein zweiter Schwellenwert ist.

**Revendications**

1.  Procédé (510) réalisé par un nœud de réseau, comprenant :

    la détermination (512) s'il faut ou non déclencher une configuration de partie de bande passante pour une commutation d'espacement de sous-porteuses pour un dispositif terminal, en fonction d'un ou plusieurs paramètres du dispositif terminal ; et

    la transmission (514) d'un indicateur au dispositif terminal pour déclencher la configuration de partie de bande passante pour la commutation d'espacement de sous-porteuses, en réponse à la détermination qu'il faut déclencher la configuration de partie de bande passante pour le dispositif terminal, dans lequel la détermination s'il faut ou non déclencher la configuration de partie de bande passante pour la commutation d'espacement de sous-porteuses pour le dispositif terminal en fonction des un ou plusieurs paramètres du dispositif terminal comprend :

    la détermination qu'il faut déclencher la configuration de partie de bande passante pour la commutation d'un premier espacement de sous-porteuses à un deuxième espacement de sous-porteuses pour le dispositif terminal, en réponse au fait que les un ou plusieurs paramètres remplissent un premier critère, **caractérisé en ce que** le deuxième espacement de sous-porteuses est plus grand que le premier espacement de sous-porteuses, le premier critère indiquant qu'un facteur de vitesse du dispositif terminal est plus grand qu'un premier seuil et un facteur multivoie du dispositif terminal est inférieur à un deuxième seuil.

2.  Procédé selon la revendication 1, dans lequel la configuration de partie de bande passante indique au dispositif terminal de commuter d'une première partie de bande passante à une deuxième partie de bande passante, et dans lequel la première partie de bande passante et la deuxième partie de bande passante sont configurées avec des espacements de sous-porteuses différents.

3.  Procédé selon la revendication 1, dans lequel le premier critère indique qu'une différence entre des poids d'un facteur de vitesse et un facteur multivoie du dispositif terminal se trouve à l'intérieur d'une première plage.

4.  Procédé selon la revendication 1, dans lequel le premier critère indique qu'un type de trafic du dispositif terminal est associé à une première exigence de retard.

5.  Nœud de réseau (610), comprenant :

    un ou plusieurs processeurs (611) ; et
    une ou plusieurs mémoires (612) stockant des codes de programmes informatiques (613),
    les une ou plusieurs mémoires (612) et les codes de programmes informatiques (613) étant configurés, avec les un ou plusieurs processeurs (611), pour amener le nœud de réseau (610) au moins à :

    déterminer s'il faut ou non déclencher une configuration de partie de bande passante pour une commutation d'espacement de sous-porteuses pour un dispositif terminal, en fonction d'un ou plusieurs paramètres du dispositif terminal ; et

transmettre un indicateur au dispositif terminal pour déclencher la configuration de partie de bande passante pour la commutation d'espacement de sous-porteuses, en réponse à la détermination qu'il faut déclencher la configuration de partie de bande passante pour le dispositif terminal, dans lequel la détermination s'il faut ou non déclencher la configuration de partie de bande passante pour la commutation d'espacement de sous-porteuses pour le dispositif terminal en fonction des un ou plusieurs paramètres du dispositif terminal comprend :

la détermination qu'il faut déclencher la configuration de partie de bande passante pour la commutation d'un premier espacement de sous-porteuses à un deuxième espacement de sous-porteuses pour le dispositif terminal, en réponse au fait que les un ou plusieurs paramètres remplissent un premier critère, **caractérisé en ce que** le deuxième espacement de sous-porteuses est plus grand que le premier espacement de sous-porteuses, le premier critère indiquant qu'un facteur de vitesse du dispositif terminal est plus grand qu'un premier seuil et un facteur multivoie du dispositif terminal est inférieur à un deuxième seuil.

6. Procédé (520) réalisé par un dispositif terminal, comprenant :

la réception (522) d'un indicateur depuis un nœud de réseau pour déclencher une configuration de partie de bande passante pour une commutation d'espacement de sous-porteuses pour le dispositif terminal, dans lequel la configuration de partie de bande passante est basée au moins en partie sur un ou plusieurs paramètres du dispositif terminal ; et

le déclenchement (524) de la configuration de partie de bande passante pour la commutation d'espacement de sous-porteuses, en réponse à la réception de l'indicateur depuis le nœud de réseau, dans lequel le déclenchement de la configuration de partie de bande passante pour la commutation d'espacement de sous-porteuses comprend :

la réalisation d'une commutation de partie de bande passante pour commuter d'un premier espacement de sous-porteuses à un deuxième espacement de sous-porteuses, dans lequel le deuxième espacement de sous-porteuses est plus grand que le premier espacement de sous-porteuses, et les un ou plusieurs paramètres remplissent un premier critère,

**caractérisé en ce que** le premier critère indique qu'un facteur de vitesse du dispositif terminal est plus grand qu'un premier seuil et un facteur multivoie du dispositif terminal est inférieur à un deuxième seuil.

7. Dispositif terminal (610), comprenant :

un ou plusieurs processeurs (611) ; et
une ou plusieurs mémoires (612) stockant des codes de programmes informatiques (613),
les une ou plusieurs mémoires (612) et les codes de programmes informatiques (613) étant configurés, avec les un ou plusieurs processeurs (611), pour amener le dispositif terminal (610) au moins à :

recevoir un indicateur depuis un nœud de réseau pour déclencher une configuration de partie de bande passante pour une commutation d'espacement de sous-porteuses pour le dispositif terminal, dans lequel la configuration de partie de bande passante est basée au moins en partie sur un ou plusieurs paramètres du dispositif terminal ; et

déclencher la configuration de partie de bande passante pour la commutation d'espacement de sous-porteuses, en réponse à la réception de l'indicateur depuis le nœud de réseau, dans lequel le déclenchement de la configuration de partie de bande passante pour la commutation d'espacement de sous-porteuses comprend :

la réalisation d'une commutation de partie de bande passante pour commuter d'un premier espacement de sous-porteuses à un deuxième espacement de sous-porteuses, **caractérisé en ce que** le deuxième espacement de sous-porteuses est plus grand que le premier espacement de sous-porteuses, et les un ou plusieurs paramètres remplissent un premier critère,

dans lequel le premier critère indique qu'un facteur de vitesse du dispositif terminal est plus grand qu'un premier seuil et un facteur multivoie du dispositif terminal est inférieur à un deuxième seuil.

Overall carrier

BWP

## Fig.1A

Overall carrier

BWP2

BWP1

## Fig.1B

Overall carrier

BWP2

BWP1

## Fig.1C

Overall carrier

Fig.1D

Overall carrier

Fig.1E

| bwp – DiffNumerology | ENUMERATED {upto4} |
|---|---|

Fig.2A

```
BWP : : =                        SEQUENCE   {
     locationAndBandwidth              INTEGER   (0 . . 37949),
     subcarrierSpacing                 SubcarrierSpacing,
     cyclicPrefix                      ENUMERATED {   extended   }
}
```

Fig.2B

gNB                                                    UE

**311** RRC configuration

several NR BWPs

**312** Measurement

**313** Switch NR BWP

(RRC/DCI based)

Fig.3A

BWP#1                    BWP#2                    BWP#3

14 symbols
per slot

14 symbols                                                    14 symbols
per slot                                                      per slot    Frequency

Subcarrier spacing (Δf) e.g. 60 kHz

Δf e.g. 30 kHz

Numerology (μ =1)                                    1 resource block (RB) = 12 subcarriers

Numerology (μ=2)

Δf e.g. 15 kHz

Time

Numerology (μ =0)

Fig.3B

High velocity-W_v=6 ——————3——————→ Many paths-W_p=3

Middle velocity-W_v=5 ——————3——————→ Middle paths-W_p=2

Low velocity-W_v=4 ——————3——————→ Little paths-W_p=1

High velocity-W_v=6    4    Many paths-W_p=3

Middle velocity-W_v=5    4    5    Middle paths-W_p=2

Low velocity-W_v=4    Little paths-W_p=1

High velocity-W_v=6    2    Many paths-W_p=3

Middle velocity-W_v=5    1    2    Middle paths-W_p=2

Low velocity-W_v=4    Little paths-W_p=1

Fig.4A

Frequency

Group0

Guard band 1

Group1

Guard band 2

Group2

Fig.4B

<u>510</u>

Determine whether to trigger BWP configuration for SCS switching for a terminal device, according to one or more parameters of the terminal device — 512

Transmit an indicator to the terminal device to trigger the BWP configuration for the SCS switching, in response to determining to trigger the BWP configuration for the terminal device — 514

Fig.5A

<u>520</u>

Receive an indicator from a network node to trigger BWP configuration for SCS switching for the terminal device — 522

Trigger the BWP configuration for the SCS switching, in response to the reception of the indicator from the network node — 524

Fig.5B

610

APPARATUS

611                    612

PROCESSOR ⟷ MEMORY

613

Fig.6A

620

APPARATUS

621                    622

Determining Unit          Transmitting Unit

Fig.6B

630

APPARATUS

631                    632

Receiving Unit            Triggering Unit

Fig.6C

Fig.7

**Fig.8**

BEGIN

910
Host computer provides user data

911
Host computer executes host application

920
Host computer initiates transmission carrying the user data to the UE

930
Base station transmits the user data

940
UE executes client application

END

Fig.9

BEGIN

1010
Host computer
provides user
data

1020
Host computer
initiates
transmission
carrying the
user data to the
UE

1030
UE receives the
user data

END

Fig.10

Fig.11

BEGIN

1210
Base station
receives user
data from UE

1220
Base station
initiates
transmission of
user data to the
host computer

1230
Host computer
receives the
user data

END

Fig.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019312635 A1
- US 2019104543 A1
- WO 2019165224 A1
- US 2013028128 A1